# EUROPEAN PATENT APPLICATION

(11) **EP 2 597 652 A1**
(43) Date of publication of application: **29.05.2013**
(21) Application number: 11809669.2
(22) Date of filing: 20.07.2011
(51) Int. Cl.: G21G 7/00, G21B 3/00

(54) **NUCLEAR TRANSFORMATION METHOD AND NUCLEAR TRANSFORMATION DEVICE**

(30) Priority: 31.01.2011 JP 2011017452; 26.10.2010 JP 2010239591; 20.07.2010 JP 2010162874
(71) Applicant: Ishikawa, Yasuo, Chigasaki-shi, Kanagawa 253-0082 (JP)
(72) Inventor: MIZUNO Tadahiko, Sapporo-shi Hokkaido 065-0016 (JP); ISHIKAWA, Yasuo, Kanagawa 253-0082 (JP)
(74) Representative: Viering, Jentschura & Partner
(86) International application number: PCT/JP2011/066472
(87) International publication number: WO 2012/011499

(57) **Abstract**

Nuclear transformation method and apparatus can produce thermal energy and hydrogen with a simple structure. A reaction cell 1, 100, made of metal material like iron, from which oxygen is discharged is heated by a heater 6,115 at a temperature above 500°C. Water is supplied into the reaction cell 1,100 to be changed into steam which reacts on the inner wall of the reaction cell 1,100 to produce hydrogen and thermal energy through a nuclear transformation. In the case that a reaction agent (NaOH, K₂TiO₃) which includes at least alkaline metal and oxygen is accommodated in the reaction cell 1,100, a nuclear reaction occurs without the supply of water. Steam may be supplied into the reaction cell 1, 100 to activate the nuclear reaction and fins t 124 as a metal element supplying body may be accommodated in the reaction cell 1,100 to increase the area of the metal surface.

## Description

### Technical Field

This invention relates to a method of and an apparatus for producing a nuclear reaction at a low temperature.

### Technical Background

The present applicant has filed several applications about the inventions for producing hydrogen from water in which nickel, chromium and iron elements are brought into contact with alkaline metal molten salt, fine particle groups are dispersed in a reaction space from the liquid surface of the molten salt, and steam is brought into contact with the fine particle groups.

### Prior Art Document

### Patent Document

Patent document 1 Patent Application No. 2009-9733
Patent document 2 Patent Application No. 2009-125
Patent document 3 Patent Application No. 2009-120757
Patent document 4 Patent Application No. 2009-0356

### Summary of the Invention

### Problem to be Solved by the Invention

In these applications, it is disclosed that water can be resolved by a physical and chemical reaction. However, there are phenomena which cannot be explained sufficiently by only the physical and chemical reaction.

### Means for Solving the Problem

In a first method of nuclear transformation, metal material is disposed in an atmosphere from which oxygen is eliminated, and water is supplied into the atmosphere so that steam is brought into contact with the surface of the metal material thereby to produce a nuclear transformation.

In a second method of nuclear transformation, metal material is disposed in an atmosphere without oxygen, a reaction agent including, at least, alkaline metal and oxygen is disposed, the metal material and the reaction agent are so heated that fine particles are dispersed in the atmosphere from the surface of the reaction agent thereby to generate a nuclear reaction between the fine particles and the surface of the metal material. Further, it is preferable that water is supplied into the atmosphere without oxygen. And the atmosphere is preferably heated at a temperature above 490°C.

A first nuclear transformation apparatus of this invention comprises a hollow reaction cell made of metal material, a heating device for heating the reaction cell and an air elimination device for eliminating air from the inside of the reaction cell, and water is supplied into the reaction cell. And a metal element supply body is accommodated in the reaction cell. Furthermore, a heat exchanger is disposed in the reaction cell so that heat energy can be taken out through the heat exchanger.

A second nuclear transformation apparatus of this invention comprises a hollow reaction cell made of metal material, a heating device for heating the reaction cell, an air elimination device for eliminating air from the inside of the reaction cell and a reaction agent which is accommodated in the reaction cell and includes at least alkaline metal and oxygen. And water is preferably supplied into the reaction cell. Further, a gas discharging pipe having a small diameter is preferably provided on the reaction cell.

A third nuclear transformation apparatus of this invention comprises a sealed casing for producing an atmosphere without oxygen, a pair of opposed electrodes which are disposed in the sealed casing and have metal particles of nanometer size thereon and a power source for supplying electric current onto the electrodes, a reaction gas such as steam, deuterium, tritium or helium 3 being supplied between the opposed electrodes.

A fourth nuclear transformation apparatus of this invention comprises a sealed casing for producing an atmosphere without oxygen, a nano-particle holding body as a heat conductor which is disposed in the sealed casing, holds metal particles of nanometer size thereon and a heating device for heating the nano-particle holding body and the sealed casing, a reaction gas such as steam, deuterium, tritium and helium 3 being supplied into the sealed casing.

### Effect of the Invention

The nuclear transformation method of this invention makes use of features of the metal surface of SUS304 or iron in which the metal surface is activated at approximately 500 °C to produce a plasma atmosphere. When steam is brought into contact with the metal surface, the steam is ionized to produce fine oxide particles, on the order of nanometers, including metal ions and oxygen ions. At that time, the particles take in electrons in their neighborhood thereby to make the electrons heavy. As a result, the atoms in the particles are shrunk to narrow the length between those nuclei. Further, the heavy electrons are absorbed in oxygen ions or hydrogen ions at the boundaries between the particles to shrink the oxygen ions or hydrogen ions, so that the length between the nuclei is narrowed to increase the possibility of nuclear transformation. This nuclear transformation occurs in succession, and however, a reaction cell is not melt down because exothermic reaction and endothermic reaction are in proportion at the time of the nuclear transformation. Further, if reaction agent including at least alkaline metal and oxygen is accommodated in a reaction cell, the minute oxide particles are dispersed to be brought into contact with the metal surface thereby to produce minute oxide particles on the order of nanometers. As mentioned above, at this time, the heavy electrons are produced to shrink atoms to make a condition in which a nuclear reaction easily occurs. Thus, there is a possibility for the nuclear reaction to occur at a low temperature of 500°C.

Furthermore, the nuclear transformation apparatus of the present invention comprises the heating device for heating the reaction cell at a temperature above 500°C and the air elimination device such as a vacuum pump for eliminating air from the inside of the reaction cell. Water can be supplied into the cell. Reaction agent such as potassium hydroxide (KOH), sodium hydroxide (NaOH) or potassium titanate (K₂TiO₃) may be accommodated in the reaction cell without water. Further, both of reaction agent and water may be accommodated in the reaction cell. This simple structure can produce a lot of hydrogen and heat energy. If the reaction cell is provided with a heat exchanger, the heat energy can be easily taken out. In addition, if the reaction cell is provided with the gas discharging pipe having a diameter smaller than the reaction cell to produce hydrogen, the temperature of the hydrogen is lowered through the gas discharging pipe. Therefore, means for dropping the temperature of hydrogen is not necessary.

Furthermore, if conductive electrodes with metal particles on the order of nanometers on their surfaces are opposed to each other to be charged between two electrodes and gases such as deuterium, tritium or helium 3 are supplied into the atmosphere, a nuclear reaction can be easily produced with a small size of apparatus.

In addition, if a nano-particle supporting body with metal nano-particles thereon is disposed in the reaction cell without oxygen, and gases such as steam, deuterium, tritium or helium 3 are supplied into the atmosphere while the reaction cell is heated at a temperature above 500°C, a nuclear reaction can be easily produced with a small size of apparatus.

### <Brief Description of the Drawings>

Figure 1 shows a schematic structural view of a nuclear transformation system S₁ of longitudinal type to illustrate a basic concept of the present invention.
Figure 2 shows a view of an atom ratio spectrum in case that a reaction gas collected from a reaction cell of vertical type shown in Figure 1 is analyzed by a mass spectrograph.
Figure 3 shows a perspective view of a cut piece of the vertical type of the reaction cell.
Figure 4 shows a schematic structural view of another nuclear transformation system S₂ of vertical type to illustrate the basic concept of the present invention.
Figure 5 shows an atom ratio spectrum view in case that reaction gas collected from a reaction cell of vertical type shown in Figure 4 is analyzed by the mass spectrograph.
Figure 6 shows a schematic structural view of other nuclear transformation system S₃ of lateral type to illustrate the basic concept of the present invention.
Figure 7 shows a graph to illustrate the change of temperature at a gas discharging pipe.
Figure 8 shows an explanatory view to illustrate the condition of the inner wall of the reaction cell shown in Figure 1.
Figure 9 shows an explanatory view to illustrate the condition of the inner wall of the reaction cell in Figure 4.
Figure 10 shows a schematic structural view of a nuclear transformation system S₄.
Figure 11 shows a sectional view of alloy film formed on the inner wall of the reaction cell.
Figure 12 shows a graph to illustrate the relationship between the pressure of the reaction cell and the volume of hydrogen generated.
Figure 13 shows a graph to illustrate the relationship between the temperature of the reaction cell and the volume of hydrogen generated.
Figure 14 shows a view of an atom ratio spectrum of the mass spectrograph in case that oxygen is eliminated from the inside of the reaction cell.
Figure 15 shows a view of an atom ratio spectrum of the mass spectrograph in case that oxygen is supplied into the reaction cell.
Figure 16 shows a perspective view to illustrate the cut piece of the side wall of the reaction cell.
Figure 17 shows a graph to illustrate the atom ratio of the elements which were much detected with respect to the height positions on the wall of the cut piece shown in Figure 16.
Figure 18 shows a graph to illustrate the atom ratio of the elements which were a little detected with respect to the height position on the inner wall of the cut piece shown in Figure 16.
Figure 19 shows a graph to illustrate the atom ratio of elements which were much detected with respect to the height positions on the cut piece of another reaction cell.
Figure 20 shows a graph to illustrate the atom ratio of elements which were a little detected with respect to the height positions on the cut piece of another reaction cell.
Figure 21 shows a graph to illustrate the generation of γ ray and neutrons during experiments.
Figure 22 shows a schematic structural view of a practical nuclear transformation apparatus.
Figure 23 shows a schematic perspective view of a practical nuclear transformation apparatus.
Figure 24 shows mass spectrum of reaction gas collected from the practical nuclear transformation apparatus.
Figure 25 shows a schematic structural view of a nuclear fusion reactor.
Figure 26 shows a schematic structural view of a poisonous material resolution reactor to which this invention is applied.
Figure 27 shows a schematic structural view of a metal surface treating reactor to which this invention is applied.
Figure 28 shows a schematic structural view of a rare metal production system.
Figure 29 shows a schematic structural view of a nuclear transformation system S₈ according to this invention.
Figure 30 shows a perspective view of the reaction cell shown in Figure 29.
Figure 31 shows a perspective view of a reaction cell which is one of the other embodiments of this invention.
Figure 32 shows a schematic structural view of a nuclear transformation system S₉ according to this invention.
Figure 33 shows a partially broken view of the reaction cell shown in Figure 32.
Figure 34 shows an explanatory view of a hydrogen collection pipe connected to the nuclear transformation system S₉ shown in Figure 32.
Figure 35 shows a schematic structural view of a nuclear transformation system S₁₀ according to this invention.
Figure 36 shows a schematic structural view of a nuclear transformation system S₁₁ according to this invention.
Figure 37 shows a perspective view of a neutron generation apparatus.
Figure 38 shows a sectional view of the main body of the neutron generation apparatus shown in Figure 37.
Figure 39 shows a schematic structural view of a nuclear transformation apparatus S₁₂.
Figure 40 shows a schematic structural view of a nuclear transformation apparatus S₁₃.

### Mode for Carrying Out the Invention

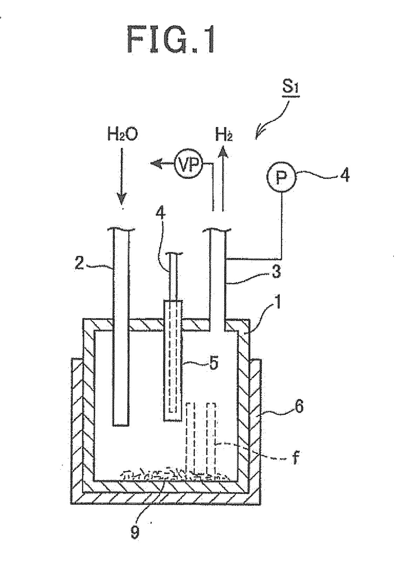

Figure 1 shows the basic concept of a nuclear transformation system S₁. The upper surface of a reaction cell 1 in the shape of a hollow cylinder has a water pipe 2 for water supply, a gas discharging pipe 3 for discharging reaction gas and a holding cylinder 5 for holding a thermocoupler 4, and the reaction cell 1 is covered with a plate-like heater 6. And the discharging pipe 3 is provided with a pressure gauge 4 for measuring the gas pressure inside of the reaction cell 1.

The reaction cell 1 is made of metal, e.g., SUS304 (18%Cr-8%Ni-remains Fe) or iron (rolled structural steel 55400; P below 0.05%, S below 0.05%, remains Fe), and the heater 6 can heat the reaction cell 1 at a temperature above 700°C. Further, the reaction cell 1 is vacuumed (0.1 pa) by a vacuum pump V • P as an air elimination device so that oxygen in the air is almost completely eliminated therefrom.

In case that the reaction cell 1 is made of ceramics, a fin 5 like SUS304 is needed as a metal element supply body, and it may be made of the same material as that of the reaction cell 1. Also, in case that the reaction cell 1 is made of metal, the addition of the fin 5 increases a reaction surface to activate a reaction.

### First Experimental Example

The material of the reaction cell 1 was SUS304, the inner diameter thereof was 11.5 cm, the height hereof was 18 cm and the thickness thereof was 3 mm. After it was vacuumed and heated at approximately 700°C. Water of 0.5cc was supplied thereinto at a time, and water was supplied 94 times for 25 days so that water of 23.5cc was supplied in total. Hydrogen of 73ℓ was generated in total. Hydrogen was steadily generated after the water supply of 94 days, and, however, the water supply was stopped in a good condition. Each operation was performed in such a way that a valve on the discharging pipe 3 was closed after each water supply, and a valve disposed on the pipe 3 was opened after the gas pressure (steam and hydrogen) was increased at 0.054Mpa on average. As a result, hydrogen started to be generated at the lowest temperature of 491°C, and was steadily generated at a temperature above 600°C.
The collected gas from the reaction cell 1 was analyzed by a mass spectrum to obtain atom ratios (M/e spectrum) with respect to each mass number, and the mass ratio of hydrogen was 95.4% with other gases being hardly detected.

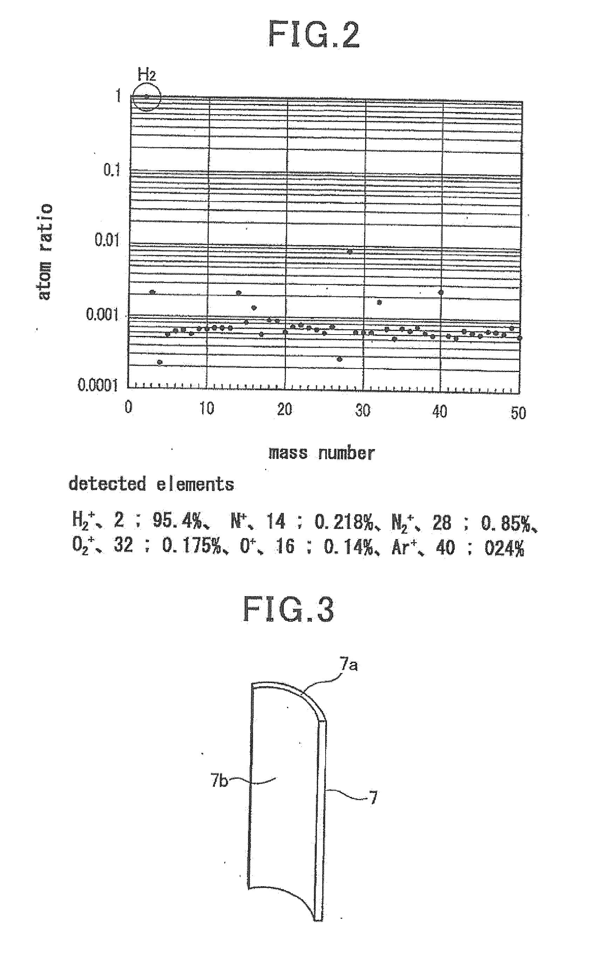

As shown in Figure 3, the side wall of the reaction cell 1 was cut to obtain a cut piece 7, and its outer and inner surfaces 7a, 7b were examined by a microscope having a high ability.
The following elements were, as shown in Table 1 detected on the outer surface thereof.

**[Table 1]**

| Element | Mass Ratio % |
|---|---|
| O | 0.002 |
| Si | 0.276 |
| Ca | 0.123 |
| V | 0.070 |
| Cr | 15.333 |
| Mn | 0.073 |
| Fe | 73.226 |
| Ni | 9.966 |
| Cu | 0.196 |
| Nb | 0.006 |
| Mo | 0.004 |

The following elements were, as shown in Table 2, detected on the inner surface thereof.

**[Table 2]**

| Element | Mass Ratio % |
|---|---|
| Na | 5.90 |
| Aℓ | 4.20 |
| Si | 0.32 |
| P | 0.13 |
| K | 0.07 |
| Ca | 0.15 |
| Ti | 0.45 |
| V | 0.44 |
| Cr | 20.10 |
| Mn | 0.70 |
| Fe | 51.70 |
| Ni | 9.60 |
| Cu | 0.21 |
| Zn | 0.16 |
| La | 2.70 |
| Ce | 2.70 |
| Hg | 0.18 |

The outer surface 7a has the same ingredients as normal SUS304, and, however, on the inner surface 7b were detected sodium (Na 5.9%), Alminum (Al 14.2%), lanthanum (La 2.7%) and cerium (Ce 2.7%) which were not detected before the experiment. In stead of the appearance of those elements, the ingredient of iron were decreased (51.7%).

In addition, oxygen was hardly detected on the inner and outer surfaces.

Some isotope analyses and noticeable points with respect to the chromium (Cr), iron (Fe), nickel (Ni), silicon (Si), calcium (Ca), cupper (Cu) and zinc (Zn) were shown on Tables 3, 4, 5, 6, 7, 8 and 9, respectively.

**[Table 3]**

| Isotope | Normal Mass Ratio % | Experimental Mass Ratio % |
|---|---|---|
| Cr50 | 4.35 | 6.52 |
| Cr52 | 83.79 | 64 |
| Cr53 | 9.50 | 22.3 |
| Cr54 | 2.37 | 7.18 |

The normal mass ratio means the normal distribution of Cr on the earth, and the experimental mass ratio means the distribution of the Cr detected on the cut piece after the experiment.

**[Table 4]**

| Isotope | Normal Mass Ratio % | Experimental Mass Ratio % |
|---|---|---|
| Fe54 | 5.80 | 5.30 |
| Fe56 | 91.72 | 86.90 |
| Fe57 | 2.20 | 6.00 |
| Fe58 | 0.28 | 1.80 |

The difference between the two cases was small.

**[Table 5]**

| Isotope | Normal Mass Ratio % | Experimental Mass Ratio % |
|---|---|---|
| Ni58 | 68.27 | 42.3 |
| Ni60 | 26.10 | 12.5 |
| Ni61 | 1.13 | 22.9 |
| Ni62 | 3.59 | 10.3 |
| Ni64 | 6.91 | 12 |

In detected Ni, the differences among isotopes because small.

**[Table 6]**

| Isotope | Normal Mass Ratio % | Experimental Mass Ratio % |
|---|---|---|
| Si28 | 92.23 | 88.50 |
| Si29 | 4.67 | 6.50 |
| Si30 | 3.10 | 5.00 |

Si did not exist originally, and however there was a small difference between the normal and experimental mass ratios.

**[Table 7]**

| Isotope | Normal Mass Ratio % | Experimental Mass Ratio % |
|---|---|---|
| Ca40 | 96.94 | 83.62 |
| Ca42 | 0.65 | 2.60 |
| Ca43 | 0.14 | 2.27 |
| Ca44 | 2.09 | 11.30 |
| Ca48 | 0.19 | 0.21 |

Ca did not exist originally, and the detected Ca44 has a large value in comparison with the normal one.

**[Table 8]**

| Isotope | Normal Mass Ratio % | Experimental Mass Ratio % |
|---|---|---|
| Cu63 | 69.20 | 68.80 |
| Cu65 | 30.80 | 31.20 |

Cu did not exist originally and the two distributions were almost the same.

**[Table 9]**

| Isotope | Normal Mass Ratio % | Experimental Mass Ratio % |
|---|---|---|
| Zn64 | 48.60 | 37.5 |
| Zn66 | 27.90 | 26 |
| Zn67 | 4.10 | 15.6 |
| Zn68 | 18.80 | 16.4 |
| Zn70 | 0.60 | 4.5 |

Zn did not exist originally and the detected Zn67 has a bigger value than the normal one.
Further, a small amount of minute stainless steel particles 9 was found on the bottom plate of the reaction cell 1 after the experiment, the particles have magnetism, and metal structure was not austenite.

Instead of the stainless steel reaction cell, a reaction cell made of iron (SS400) and having the same shape and size was prepared. The iron reaction cell was heated with no oxygen therein, so that hydrogen was generated at approximately 500°C.

### Experimental Example 2

In case that air (oxygen) was supplied into the reaction cell 1 into which water of 0.5cc was poured each time, hydrogen was not generated until the reaction cell was heated at approximately 700°C, and further the generation of hydrogen stopped after two days. A large amount of red rust was found on the inner wall of the reaction cell 1.

### Analysis 1

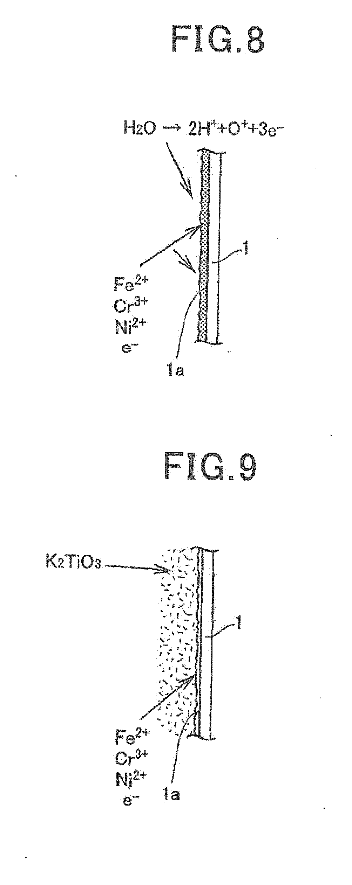

In the above unclear transformation systems, hydrogen having a high density was detected, and however oxygen was hardly detected. In addition, oxide was hardly detected on the inner wall of the reaction cell 1. And there might be some unclear reactions in consideration of the existence of the stainless steel particles 9. That is, it is supposed that the stainless steel particles (vapor) were dispersed from the inner wall of the reaction cell 1, and a part of the vapor dropped on its bottom wall while the reaction cell was cooled down. When the reaction cell 1 is heated at approximately 500°C, a plasma atmosphere is generated near its inner wall, and it includes iron ions(Fe²⁺), chromium ions (Cr³⁺), nickel ions (Ni²⁺) and electrons (Figure 8). When these ions and electrons are brought into contact with steam, the steam is ionized in the following manner.

H₂O → 2H⁺ + O⁺ + 3e- Formula(1)

The hydrogen ion becomes hydrogen atom (H) in an atmosphere including many electrons to make hydrogen gas (H₂) by combination of two hydrogen atoms.

At this time, oxygen atoms cause a corrosion reaction with iron ions (Fe²⁺) and chromium ions (Cr³⁺) to produce iron oxide (Fe₂O₃) and chromium oxide (Cr₂O₃). In case that the reaction cell is made of iron, only iron oxide is produced. These oxides comprise minute particles on the order of monometers, and at the time of oxidation reaction, the particles take electrons in their neighborhood thereinto. The electrons taken thereinto become heavy to shrink each oxygen atoms in the oxide particles to narrow the length between the nucleoli of two atoms. Thus, a nuclear confusion reaction may be produced to cause heat energy which is consumed as energy for ionizing steam. Actually, the temperature of the reaction cell did not go up suddenly, and however there is a possibility for the temperature thereof to go up and down for a short time (e.g., for 1 µ second). Further, in case that oxygen ions exist at the boundary of the oxide particles, the heavy electrons are taken into the oxygen ions to cause a nuclear reaction between oxygen atoms.

Further, the steam also includes deuterium, and therefore the combination of tritium and proton, or the combination of helium 3 (³He) and neutron may be produced through the reaction between the deuterium and the heavy electron.

And newly produced elements caused by the nuclear fusion will now be explained in a nuclear transformation system S₄.

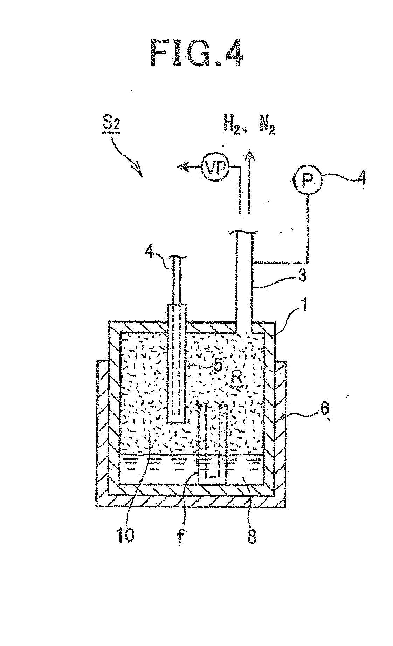

Figure 4 shows a nuclear transformation system S₂ in which the water pipe 2 (Figure 1) is omitted and reaction agent 8 is accommodated on the bottom portion of the reaction cell 1. Minute particles 10 on the order of nanometers of the reaction agent are dispersed into the inside portion of the reaction cell 1 to form a reaction space R. Also in this case, if the reaction cell 1 is formed with ceramics, some fins 1 are necessary.

### Experimental Example 3

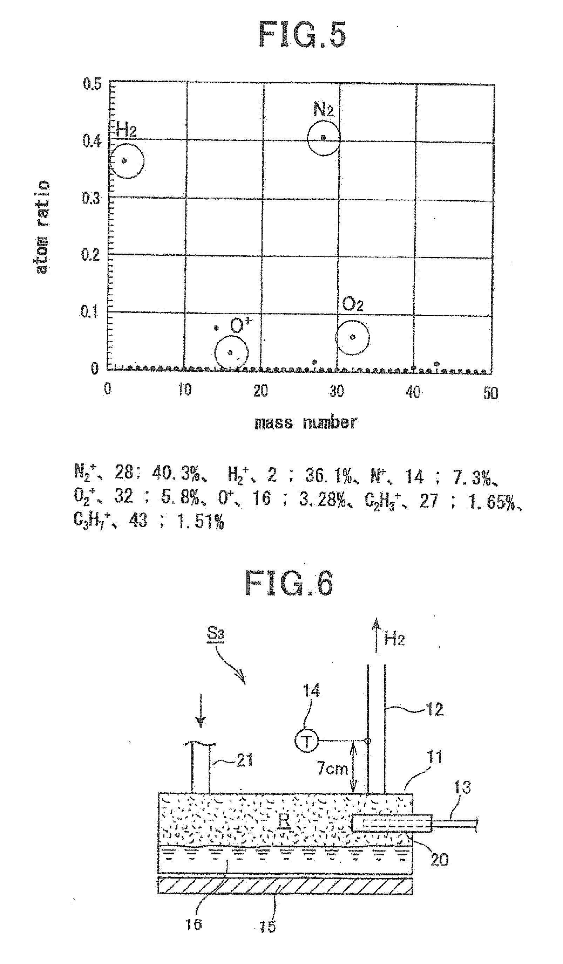

In the system S₂, in case that solid potassium titanate (K₂TiO₃) or solid sodium titanate (Na₂TiO₃) was used as the reaction agent 8 at 500°C, gas including hydrogen was generated without pouring of water. The ingredients of the gas were measured. That is, the gas included, as shown in Figure 5, nitrogen of 40%, hydrogen of 36% and oxygen of 9%. The nitrogen of 40% and oxygen of 9% show that air might be mixed with the gas at the time of the collection of the gas. However, as reaction agent, sodium hydroxide (NaOH) or potassium hydroxide (KOH) could be used in state of liquid at a temperature of 500°C to obtain a good result.
Further, in case that sodium oxide (Na₂O) titanium oxide (TiO₂) or magnesium titanate (MgTiO₃) was used as the reaction agent, no hydrogen was generated at a temperature of 500°C, even at 700°C. That is, the reaction agent must include alkaline metal, oxygen, transition metal and hydrogen.

### Analysis 2

As mentioned above, the generation of hydrogen at approximately 500°C without water in the case of potassium titanate (K₂TiO₂) or sodium titanate (Na₂TiO₃) as the reaction agent is considered to be the following reasons. Namely, as shown in Figure 9, the vapors of metal elements are produced near the inner wall 1a in the same manner as Figure 8. When the minute particles of potassium titanate (K₂TiO₃) are brought into contact with the metal vapors, the particles of the potassium titanate are ionized to be divided into potassium ion (K⁺), titanium ion (Ti⁴⁺) oxygen ion (O⁺) and electron (e⁻) in the following manner.

K₂TiO₃ → 2K⁺ + Ti⁴⁺ + 3O⁺ + 9e⁻ Formula (2)

This ionization can be generated under the existence of both alkaline metals (K, Na, etc.) and transition metal (Ti, Cr, etc.), and cannot be generated if only transition metal or alkaline earth metal (Mg, Ca, etc.) instead of alkaline metal is used (MgTiO₃). The oxygen ion (O⁺) in the Formula(2) has the same function as the oxygen ion(O⁺) in the Formula (1) to make fine oxide particles with metal ions evaporated from the wall, and the fine oxide particles take in electrons(e⁻) in their neighborhood to make heavy electrons thereby to generate the nuclear reaction. The elements newly generated by the nuclear reaction will now be explained in a nuclear transformation system S₂.

Figure 6 shows a nuclear transformation system S₃ having a lateral type cylindrical reaction cell 11 which is provided with a water pipe 21 and a gas discharging pipe 12. To the end surface of the reaction cell 11 is fastened a holding pipe 20 for holding a thermocoupler 13 which detects the temperature of a reaction space R in the reaction cell 11. And the reaction cell 11 is heated by a plate-like heater 15 and has reaction agent 16 therein. As the reaction sodium hydroxide (NaOH) or potassium hydroxide (KOH) is preferable. Also in this case, the reaction space R is filled with the fine particles of the reaction agent.

### Experimental Example 4

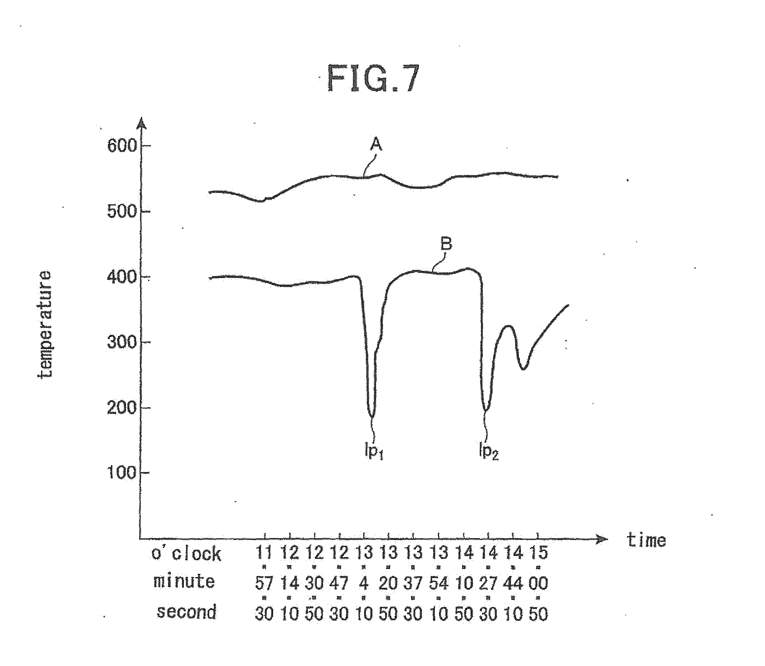

In not only the vertical-type of reaction cell 1 as shown in Figures 1 and 4 but also the lateral-type of reaction cell 11, the temperature of the gas discharged from the discharging pipe 3 or 12 was close to a room temperature. That is, the dropping of the temperature of the gas must happen anywhere in the reaction cell. Therefore, a thermocoupler 14 was set at a place of 7cm separated from the outer wall of the upper wall of the reaction cell 11 to measure the temperature of the place. In this case, the diameter (inner diameter) of the reaction cell 11 and the length thereof were 10cm and 30cm, respectively, and the inner diameter of the discharging pipe 12 was approximately 1.5cm. The result was shown in Figure 7.
A curbed line A shows data by the thermocoupler 13, and a curbed line B shows data by the thermocoupler 14. According to these date, the change of the curbed line A was small to be in a range of 520∼ 540°C in both cases that water was supplied and not supplied. However, the curbed line B shows a sudden drop above 200°C at the time when water is supplied, and the temperature went up after a predetermined time. That is, at the time when water was supplied (13:4:10 and 14:27:30), the temperature dropped at the range of approximately 170∼ 180°C from a temperature of approximately 400°C to the lowest points lp₁, and lp₂, respectively, caused by an intensive endothermic reaction. The gas itself dropped more than the range and was discharged from the discharging pipe 12 at approximately a room temperature. The temperature in the reaction space R of the reaction cell 11 did not go down as shown in the data of the thermocoupler 13, and the flow of the gas was narrowed at the discharging pipe 12 to cause the intensive endothermic reaction. That is, in order to discharge hydrogen gas at a room temperature, the diameter of the discharging pipe 12 must be narrowed less than that of the reaction cell to flow the gas faster.

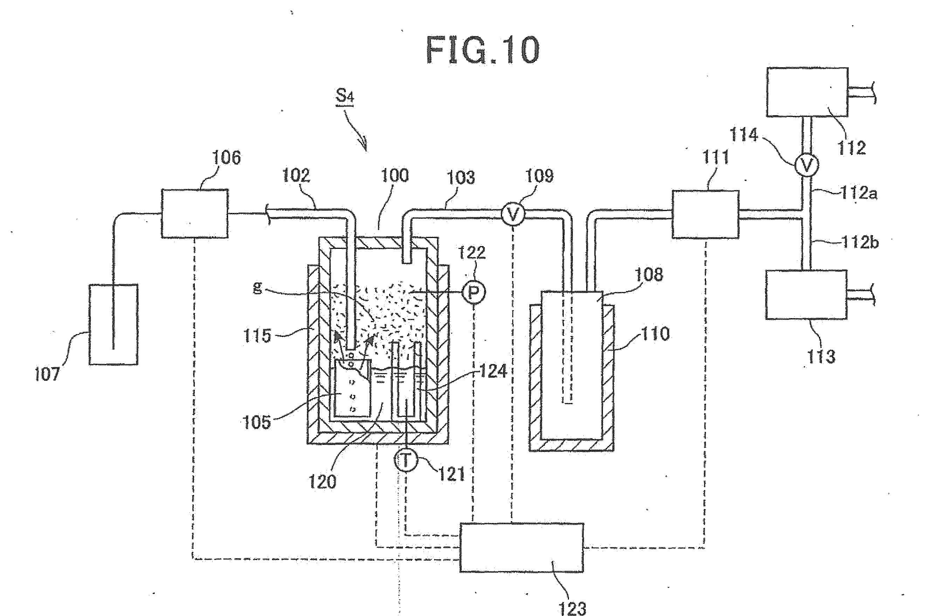

Figure 10 shows a nuclear transformation system S₄ which is provided with a reaction cell 100 having a cylindrical shape and made of stainless steel SUS304 (Cr18% - Ni8% - remains Fe). A water pipe 102 and a hydrogen pipe 103 are supported on the upper surface of the reaction cell 100, and the lower end of the water pipe 102 is opposed to a water pot 105 disposed on the bottom of the reaction cell 100, and water is supplied into the water pot 105. The water pipe 102 is connected with a tubing pump 106 for supplying a predetermined amount of water from a water tank 107 to the water pot 105 to produce steam.

The hydrogen pipe 103 is connected with a cooler 108 through a valve 109, and the cooler 108 is cooled below-70°C by coolant disposed therein. And the cooler 108 cools steam flowing out of the reaction cell 100 with hydrogen to separate it from the hydrogen.
The hydrogen flowing out of the cooler 108 passes through a flow meter 111 and is discharged outside from a spectrograph 112 connected with a first dividing pipe 112a. Further, a second dividing 112b is connected with a vacuum pump 113 for vacuuming the nuclear transformation system S₄ in a state wherein a valve 114 connected with the first dividing pipe 112a is closed.

The reaction cell 100 is covered with a plate-like heater 115 for heating the reaction cell 100 at a temperature of 300∼500°C. Reaction agent 120 with a extremely high absorbency is accommodated at the bottom of the reaction cell 100. The temperature of the reaction agent is detected by a thermometer 121, and the pressure in the reaction space R of the reaction cell 100 is detected by a pressure gauge 122. A controller 123 is connected with the tubing pump 106, the plate-like heater 115, the pressure gauge 122, the valve 109 and the flow meter 111. A fin 124 made of SUS304 is disposed at the bottom of the reaction cell 100 to form a reaction field.

### 1. Regarding Reaction Field

### (1) Atmosphere

Oxygen in the air must be eliminated from the nuclear transformation system S₄, and if the oxygen in the air (except oxygen in water) exists in the reaction cell 100, the inner wall of the reaction cell 100 and the fin 124 is melt into the reaction agent 120, so that oxidation intensively occurs to break the system S₄ in a short time.

### Experimental Example 5

However, in case that oxygen in the air does not exist in the cell, a thin alloy film is formed in the shape of layers on the inner wall of the cell 100. When NaOH was used as the reaction agent mentioned after and SUS304 was used as the reaction cell, the ingredients of the alloy film were as shown in Table 10.

**[Table 10]**

| | mol% |
|---|---|
| Na | 8.3 |
| Cr | 19.4 |
| Mn | 1.3 |
| Fe | 59.0 |
| Ni | 8.0 |
| Others | 5.0 |

According to the above Table 10, the alloy film including Na in addition to the ingredients of SUS304 alloy, had a hardness higher than that of SUS304, and was extremely fragile because of inclusion of Na. The alloy film has a function to make a reaction field, and never break the reaction field.

### (2)Reaction Agent

### (a) Molten salt

As molten salt, alkaline metal hydroxide and alkaline earth metal each of which belongs to the first and second families of the periodic table, respectively, and has a large absorbency are suitable. The alkaline metal hydroxide inclues e.g., potassium hydroxide (KOH) and sodium hydroxide (NaOH), and the alkaline earth metal hydroxide inclues, e.g., strontium hydroxide (Sr(OH)₂). These agents are heated above their melting points to be liquidized, so that they are ionized to be divided into metal ions(K⁺, Na⁺, Sr²⁺) and hydroxide ions (OH-). In addition, at least two of the alkaline metal hydroxides may be mixed, and the alkaline metal hydroxide and the alkaline earth metal hydroxide may also be mixed. Each of these agents has a melting point above 300°C, and it is preferable that the molten salt is heated a temperature of 400 to 500°C.

### (b)Composite metal oxide

Instead of the molten salt, composite metal oxide such as K₂TiO₃, Na₂TiO₃, K₂MgO₂ or Na₂MgO may be used. They are obtained in such a way that alkaline metal hydroxide (KOH, NaOH) and metal oxide (hydroxide) (TiO₂, MgO, Ca(OH)2, etc.) are heated to react with each other thereby to unite alkaline metal, another metal and oxygen with each other. Each of them is solid and has a extremely high absorbency.

On the contrary, the molten salt is liquid. It is not suitable to provide a mobile vehicle (ship, etc.) with the liquid molten salt, and, however, the reaction agent in a solid state is convenient for the mobile vehicle. These agents are preferably heated at approximately 500°C and maintained as a solid even at this temperature. The molten salt can react at a temperature lower than the solid molten salt.

The nuclear transportation system S₄ needs water, a reaction agent and metal elements, the system S₁ needs reaction agent and a metal element and the system S₂ needs reaction agent and a metal element. The solid agent such as sodium oxide (Na₂O) or magnesium titanate (MgTiO₃) is not suitable for the system S₂, and system S₄ can use such solid agent. Further, only titanium oxide (TiO₂) cannot be used for any system. That is, only oxide cannot be used for any system, and, however, exceptionally sodium oxide (Na₂O) can be used because sodium hydroxide (NaOH) is formed when water exists.

### Experimental example 6

The reaction result (the amount of hydrogen generated) is shown in Table 11 in case that the composite metal oxide which was made in a manner that KOH or NaOH was reacted on other metal oxide (hydroxide) to be dehydrated was used as a reaction agent.

**[Table 11]**

| alkaline hydroxide | metal oxide | result of reaction | alkaline hydroxide | metal oxide | result of reaction |
|---|---|---|---|---|---|
| KOH | Cr₂O₃ | ⊚ | NaOH | Cr₂O₃ | ⊚ |
| KOH | TiO₂ | ⊚ | NaOH | TiO₂ | ⊚ |
| KOH | MgO | ⊚ | NaOH | MgO | ⊚ |
| KOH | SiO₂ | ○ | NaOH | SiO₂ | ○ |
| KOH | V₂O₅ | × | NaOH | ZrO₂ | ○ |
| KOH | ZnO | ○ | NaOH | ZnO | ○ |
| KOH | MnO₂ | × | NaOH | Ca(OH)₂ | ○ |
| KOH | CaO | ○ | NaOH | NiO | Δ |
| KOH | ZrO₂ | ○ | NaOH | Co(OH)₂ | ○ |
| KOH | Ni(OH)₂ | × | NaOH | SnO₂ | ○ |
| KOH | Cu(OH)₂ | × | NaOH | Bi₂O₃ | ○ |
| KOH | Ba(OH)₂ • 8H₂O | × | NaOH | Al₂O₃ | ○ |
| KOH | Ni(OH)₂ | × | NaOH | WO₃ | ○ |
| KOH | TiO₂ Cr₂O₃ mixture | ○ | NaOH | CaO | ○ |
| KOH | MoO₃ | ○ | NaOH | Al₂O₃ SiO₂ mixture | ⊚ |
| KOH | TiO₂ Cr₂O₃MoO₃ mixture | ○ | NaOH | SiO₂ TiO₂ MgO mixture | × |
| | | | NaOH | TiO₂ Cr₂O₃ mixture | Δ |

In the above Table 11, ⊚ means "very good", ○ means "god", Δ means "generation of a small amount of hydrogen", and × means "no generation of hydrogen". A plurality of oxides means the mixture of those oxides. For example, the expression of "TiO₂, Cr₂O₃" means the mixture of both oxides. As in shown in the above Table 11, in both cases of KOH and NaOH, the combination with TiO₂, Cr₂O₃ or MgO was preferable. That is, such a combination forms potassium (sodium) titanate, potassium (sodium) chronate or potassium (sodium) magnenate which was preferable as a solid reaction agent.

### Experimental example 7

### 3) Metal element

The existence of metal elements was effective for the field of a nuclear reaction, and the materials of the reaction cell 100 and the fin 124 have a great influence on the formation of the reaction field. In the case that NaOH (molten salt), KOH(molten salt), K₂Ti₂O₅(K₂TiO₃)(solid) or Na₂Ti₂O₅(Na₂TiO₃)(solid) was used as a reaction agent together with various materials for the reaction cell 100 and the fin 124, the result with respect to the generation of the hydrogen are shown in Table 12, and the weight of each of those four reaction agents was the same. As a result, the experimental numbers 1, 2, 4, 18, 19 and 20 were good, and, that is, the combination of SUS304(18%Cr - 8%Ni - remains Fe) as the case and SUS304 as the fin, SUS316L (18%Cr - 12%Ni - 2.5%MO - low C - remains Fe) as the case and SUS304 as the fin or SUS304 as the case and Fe as the fin was good. No.5 shows that the combination of SUS430 (as both case and fin) not including Ni did not produce a reaction. According to Nos.6, 8, 10 and 11, the cases of Ni did not produce a good result. As a whole, at least one of Ni (No.7, Pd(No.12) and Pt(not shown) was effective as the fin, and the addition of at least one of transition metals was effective (Nos.1, 2, 4, 7, 18, 19, 20). The combination of SUS304 as both case and fin is not shown, and, however, even if only the case is made of SUS304 without the fin, a good reaction can be expected. In addition, if the fin made of SUS304 is added to the reaction cell, a better result can be expected. Further, even if the fin 124 is buried in the reaction agent without projecting upward from its surface, the same effect can be obtained.

**[Table 1]**

| No. | material of case | material of fin and its weight | | NaOH(KOH), K₂(Na₂)Ti₂O₅ weight | results | others |
|---|---|---|---|---|---|---|
| 1 | SUS304 | SUS430 | 55g | 100 g | ⊚ | stable |
| 2 | SUS316L | SUS430 | 55g | 100 g | ⊚ | stable |
| 3 | SUS316L | Fe • Ni alloy | 55g | 100 g | ○ | reaction for 8 days |
| 4 | SUS316L | Ni • Cr alloy | 50g | 100 g | ⊚ | stable |
| 5 | SUS430 | SUS430 | 81g | 100 g | × | small amount of hydrogen |
| 6 | Ni201 | Ni201 | 31g | 60 g | × | no reaction |
| 7 | Ni201 | Ni • Cr alloy | 30g | 60 g | ○ | slightly unstable |
| 8 | Ni201 | Fe | 50g | 40 g | × | no reaction |
| 9 | Ni201 | Mo | 25g | 40 g | ○ | 1.5ℓ hydrogen |
| 10 | Ni201 | SUS304 | 55g | 100 g | × | no reaction |
| 11 | Ni201 | SUS430 | 55g | 40 g | × | no reaction |
| 12 | SUS430 | Pd | | small amount (below 1g) | ○ | stable |
| 13 | Ni201 | W | | 100 g | ○ | slightly unstable |
| 14 | SUS430 | Ni • Cr alloy | 25g | 40 g | Δ | unstable |
| 15 | SUS316L | Ni201 | 53g | 100 g | × | no reaction |
| 16 | SUS316L | duralmin (Al 95% Cu4% Mg 0.5% Mn0.4%) | | 100 g | × | abnormal combustion |
| 17 | SUS316L | inconel | 53g | 100 g | × | no reaction |
| 18 | SUS430 | SUS316 | 55g | 100 g | ⊚ | stable |
| 19 | SUS430 | Fe | 40g | 60 g | ⊚ | stable |
| 20 | SUS304 | Fe | 40g | 60g | ⊚ | stable |

### 4)Reaction Space

The main reaction place was not inside of the reaction agent 120 but a reaction space R where a lot of fine particles g were dispersed upwardly from the surface of the reaction agent 120.

That is, in the case of the molten salt (NaOH or KOH), particles of these hydroxides were dispersed at a temperature of 300 to 500°C to fill the reaction space R with them in which the reaction occurred. Also, in the case of the solid reaction agents (K₂TiO₃), the fine particles of those solid reaction agents were dispersed from the surface of the solid reaction agents to fill the reaction space therewith in the same manner.

In the case that oxygen was eliminated from the inside of the system, the ingredients of Cr, Ni and Fe did not melt into the both reaction agents (molten salt and solid) from the inner wall of the reaction cell 100 and the fin 104 both made of SUS304. Sodium hydroxide was supplied into both cells in one of which air is supplied and from the other of which air is eliminated and heated at 500°C. In this case, red rust was detected in the case with air therein, and, however, the case without air therein was remained as it was, with no change of the weight of the fin.

### Experimental Example 8

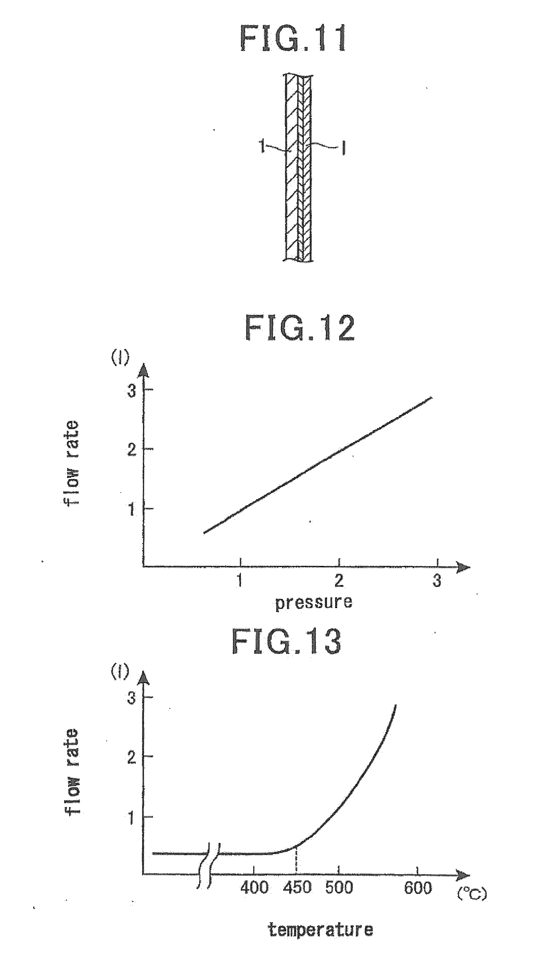

In case that sodium hydroxide (NaOH) as reaction agent was supplied into the reaction cell 100 and the valve 109 was closed, the relationships both between the pressure of the inside of the reaction cell 100 and the amount of the generation of the hydrogen and between the temperature of the inside of the cell and the amount of the generation of hydrogen are shown in Figures 12 and 13, respectively. The experiment was made in the following manner. The reaction cell 100 was heated by the plate-like heater 115 (controlled by the thermometer 121 and the controller 123) at a temperature of 300 to 500°C to produce a plasma atmosphere near the surface of the metal elements in the reaction space R. Air was completely discharged from the system by operating the vacuum pump 113 before heating the reaction cell 100. After the reaction cell 100 was heated, a predetermined amount of water from the water tank 107 was supplied by the tubing pump 106 into the water pot 105 through the water pipe 102, so that steam was produced. At this time, the valve 109 of the hydrogen pipe 103 was closed, and it was opened by the controller 123 when the pressure was raised above a predetermined value (e.g., 3 atmospheric pressure) by the generation of hydrogen in the reaction space R.

That is, the pressure of the reaction space R was proportional to the amount of the generation of hydrogen, and the amount of the generation of hydrogen increased abruptly after the temperature of the reaction agent 120 reached to 450°C (Figure 13). Further, the active level of unclear reaction was proportional to the hydrogen-generation amount.

Furthermore, the hydrogen supplied through the hydrogen pipe 103 is cooled by the cooler 108. If steam not resolved is discharged, it is changed into ice to be remained in the cooler 108. In the cooler 108 were found various elements which were mainly generated by the nuclear transformation of oxygen in the reaction cell 100. Actually, in the case that NaOH was used as the reaction agent 120 and the reaction cell 100 and the fin 124 were made of SUS304, various elements as shown in Table 13 were collected from the cooler 108.

**[Table 13]**

| element | atom ratio(mol %) |
|---|---|
| Si | 10.9473 |
| Ca | 8.9706 |
| Ti | 2.0846 |
| Cr | 7.7033 |
| Mn | 1.732 |
| Fe | 46.8294 |
| Ni | 5.5958 |
| Cu | 9.3338 |
| Zn | 4.7481 |
| Pb | 2.0053 |
| others | 0.0498 |

In the above Table 13, elements each of which did not exist in the system before the experiment and was newly generated thereafter with an abnormally large amount were Si, Cu and Ca. It is thought that at least one of oxygen (O), sodium (Na), iron (Fe), nickel (Ni) and chromium (Cr) is transformed into each of them. Especially, oxygen was not detected at all in accordance with a gas analysis as mentioned after.

In the case that water was supplied into the reaction cell 100 after its vacuum drawing (no oxygen in the cell 100), the mass spectrograph 112 showed above 97% H₂ and 0.6%N₂, and, however, oxygen (O₂) with the mass number of 32 was not detected at all.

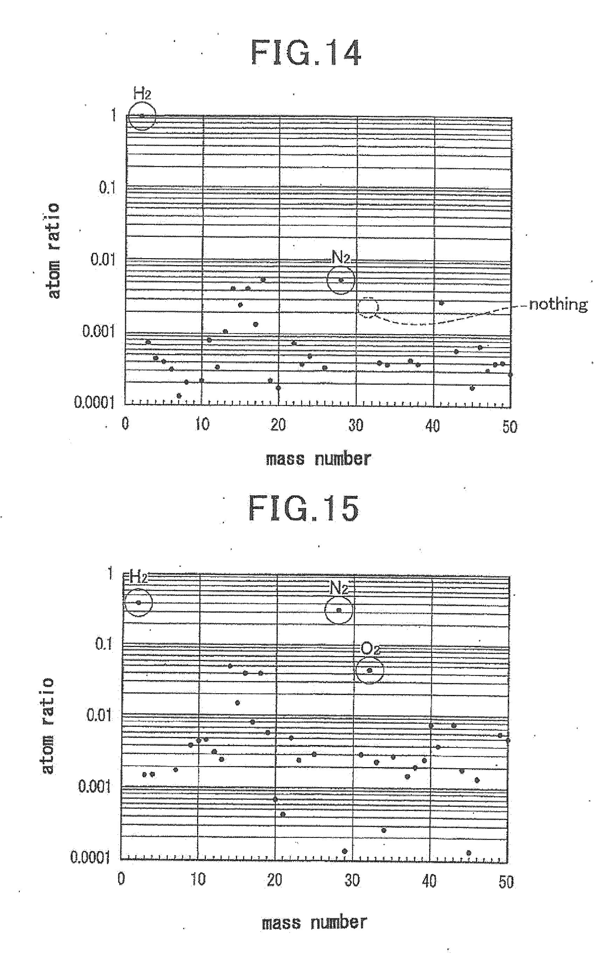

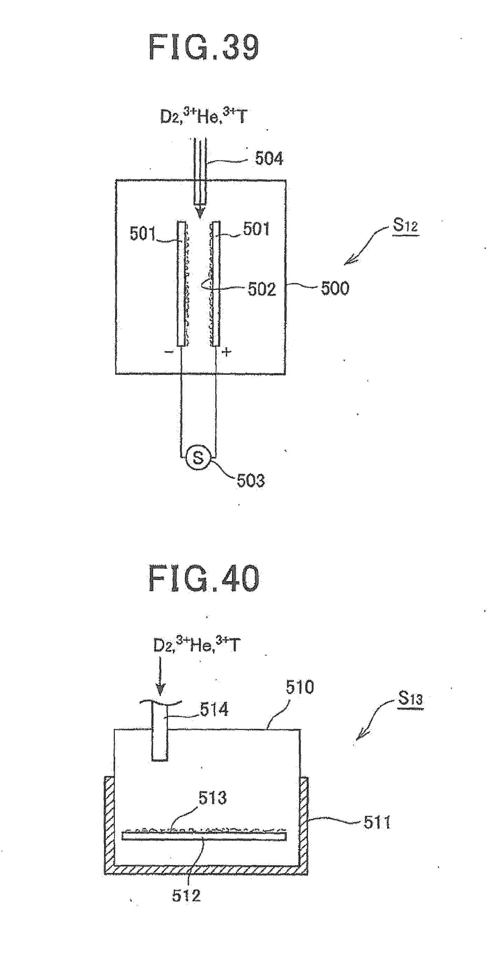

However, in the case that water is supplied into the reaction cell 100 in a state wherein air is accommodated therein without the vacuum drawing, as shown in Figure 15, 40%H2, 30%N2 and 6%02 were detected. At this time, it is considered that a nuclear reaction did not occur.

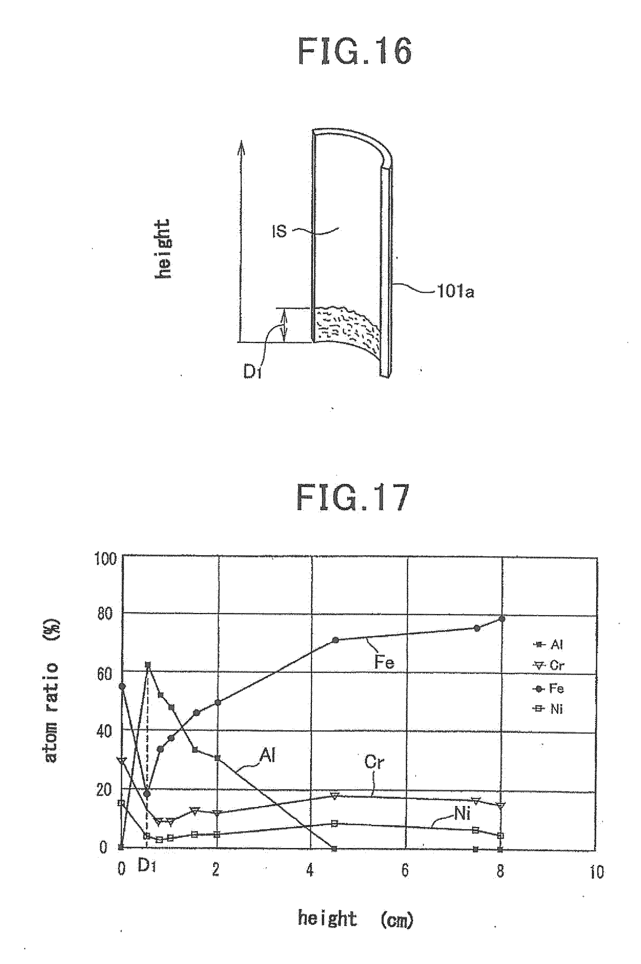

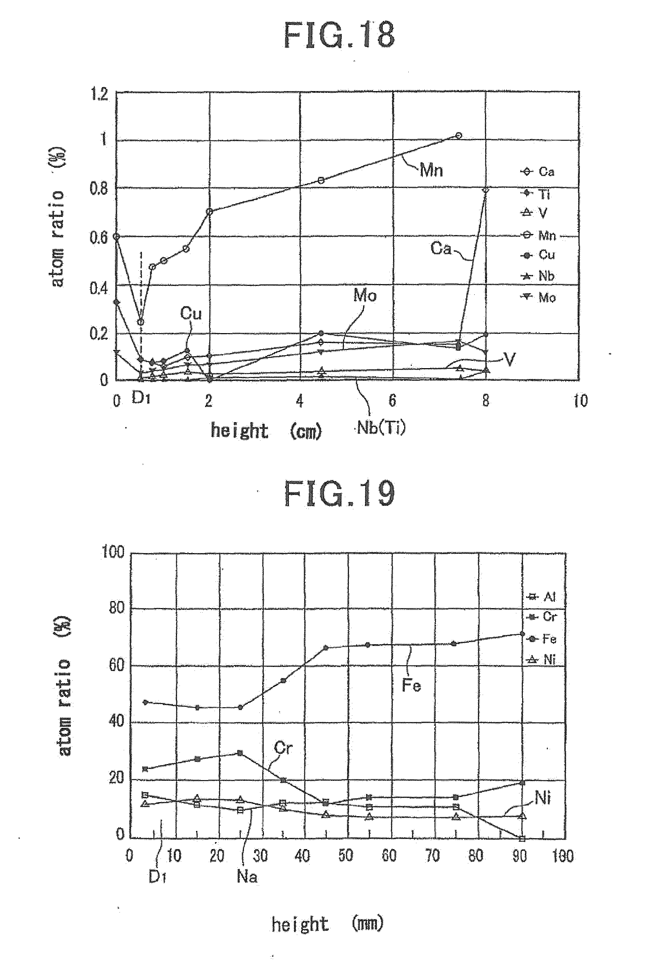

The inside of the reaction cell 100 was checked after the nuclear transformation system S₄ had been operated for approximately 10 days. Aluminum element which did not exist in the original material of SUS304 was detected on the inner surface IS of the side wall of the cell 100 as shown in Figure 16. The result was shown in Figures 17 and 18, and the vertical axis shows atom ratio (mol%) and the lateral axis shows height of a cell piece 101a, respectively. Suppose that the height of the reaction agent 120 is D1, the value of the atom ratio of A1 remarkably increased with respect to the atom ratio of Fe at the position D1, and the atom ratio of Al decreased while that of Fe increased as the height of the cell increased. At a height position above 4cm, a normal atom ratio of SUS304 was detected.
Figure 18 shows the atom ratios of small amount of elements, those of Mn and Cu decreased at the position D1 especially and those values increased as the numerical value of the height becomes large. That of Ca steeply increased.

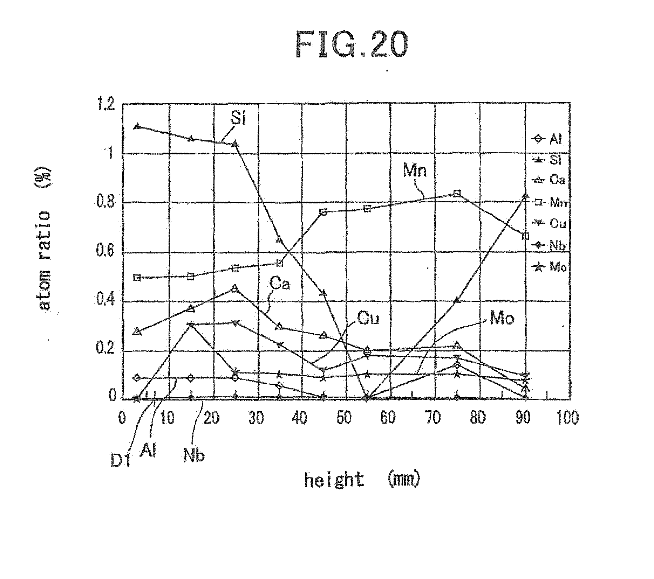

Figures 19 and 20 show the state of the inner wall of another reaction cell made of the same material after an experiment. In this case, the amount of Fe was a little near the position D 1. On the contrary, that of Cr was large, that is 22 to 25% and decreased to less than 20% near 4cm. Regarding Ni, its atom ratio did not change with respect to the height, and, regarding Na, its atom ratio was almost even (Figure 19). Regarding small amount of metals (Figure 20), the change of the atom ratio of Si was remarkable, and Mn of less than 1% was detected. Further, Al of less than 0.1% was detected.

In this way, the inner wall of the reaction cell 100 was under the influence of the plasma atmosphere to change the atom rations of the elements through a unclear transformation.

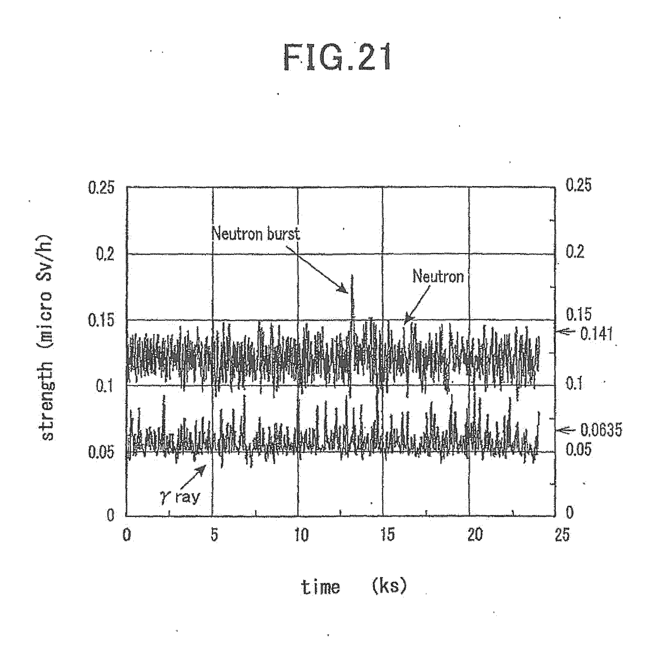

A unclear transformation emits r ray or neutron, and, therefore, the measurement of radioactive ray was performed. In Figure 21, radioactive rays with a strength on slightly higher level than the background were detected. Namely, the background value of r ray is 0.057±0.0085 µ s/h and a part slightly higher than the upper limit of 0.0635 µ s/h was detected. The background value of neutron is 0.119 ±0.022 µ s/h, and a part which is slightly higher than the upper limit of 0.141 µ sv/h was detected, and, however, these values do not exert an influence on human body.

### Analysis 3

In the above unclear transformation system S₄, the reaction agent having a high absorbency is accommodated in the reaction cell 100 into which steam is supplied to fill to fill the reaction space R with fine particles on the order of nanometer which catch the steam. The minute particles with the steam reacts on the metal surface to produce oxide in such a manner that oxygen in the fine particles and the steam are combined with metal ions (especially Fe³⁺ and Cr³⁺) in a plasma atmosphere of metal ions (Cr³⁺, Ni²⁺ and Fe³⁺). At this time, a part of oxide comprises minute particles on the order of nanometer which take in electrons around them. The electrons in the minute oxide particles become heavy to shrink the atom including the heavy electrons, so that the length between nuclei is decreased. Thus, a nuclear reaction is apt to occur. In addition, heavy electrons included in the minute particles are taken in other atoms (e.g., oxygen ion, hydrogen ion, etc.) near their boundaries to shrink those atoms. In this manner, the unclear reaction is apt to occur. Especially, steam includes deuterium of approximately 1/7000 which is apt to cause the nuclear reaction, and there is a possibility of D-D reaction. Thereby, the neutrons and protons are probably emitted to produce hydrogen.

Like this, if both reaction agent and steam are supplied, much hydrogen can be produced, and the nuclear reaction is apt to occur to generate thermal energy.

Applied examples will now be explained.

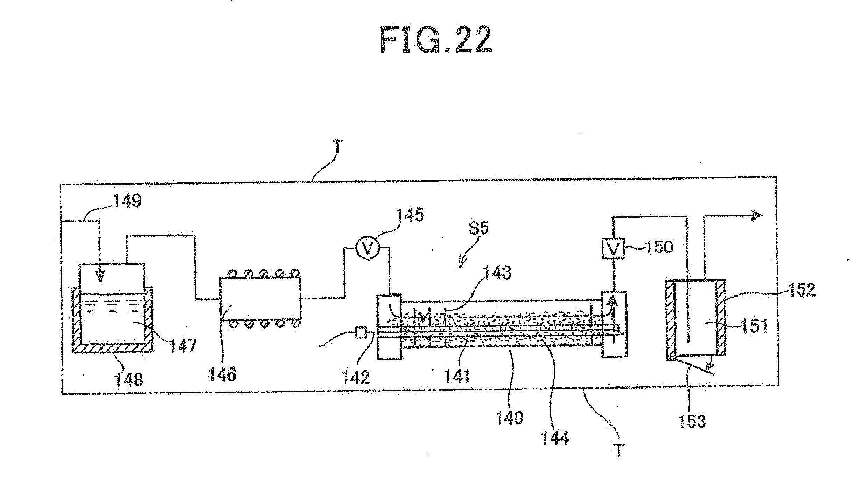

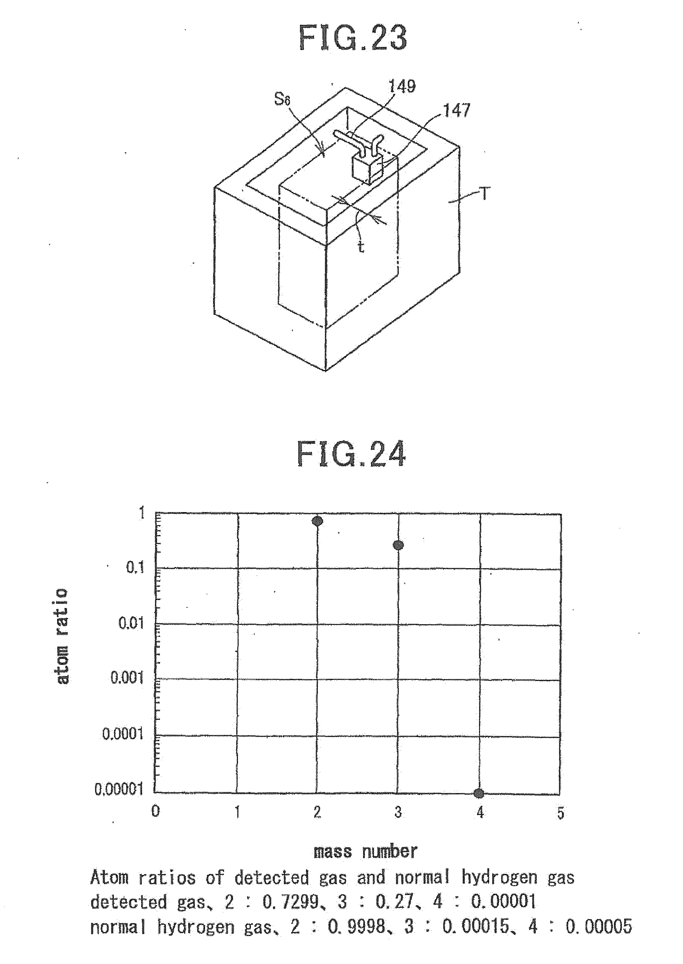

The nuclear transformation systems of this invention can be used as a hydrogen-generation device for generating a large amount of hydrogen as shown in Figures 22 and 23.

That is, a hydrogen generating systems S₅ is accommodated in a water tank T which forms a water wall of above 30cm (t=30) for shielding neutrons, and has a lateral-type reaction cell 140 in which a heating pipe 141 is disposed. A bar-like heater 142 is detachably put into the heating pipe 141, and many fins 143 are disposed at a predetermined pitch in the reaction cell 140 in which reaction agent 144 such as NaOH is set. The reaction agent is heated at a temperature of 300 to 500°C by the heater 142. Into the reaction cell 140 through a valve 145 is supplied superheated steam which is heated at a temperature above 200°C by a high frequency induction heating apparatus 146 into which steam of above 100°C made by a steam generating apparatus 147 is supplied, and the apparatus 147 is heated by a plate-like heater 148. The water tank T supplies water into the apparatus 147 thorough a pipe 149 connected to the water tank T which has the hydrogen generating system S₅ therein. The water tank T is used for shielding a little neutron ray which is emitted at the time when water is supplied into the hydrogen generating system S₅, and the thickness T of the water wall is preferably more than 30cm. Instead of the water tank T, walls formed by polyethylene may be disposed.

Further, hydrogen gas is supplied from the reaction cell 140 into a cooler 151 through a valve 150. If the hydrogen gas includes steam, the steam is eliminated from the hydrogen gas by the cooler 151 which is cooled by coolant 152. The cooler 151 has a bottom plate 153 which can be opened and closed, and residuum such as calcium (Ca) and silicon (Si) which is formed through a nuclear transformation and stored therein is discarded.

The reaction cell 140 is preferably heated at a temperature of 450 to 500°C. In an experiment in which the reaction cell 140 is formed by a cylinder with a diameter at 12cm and a length of 60cm and fins 143 are disposed at a space of 5cm. The cell 140 and the fins 143 are made of SUS304, the gas of mass number 3 was detected at a rate of above 20% (27% in Figure 24). The gas of mass number 3 was judged as helium 3 by more precise measurement.

With respect to general hydrogen gas, the gas of mass number 2 has an atom ratio of 0.9998, the gas of mass number 3 (helium 3) has an atom ratio of 0.00015 and the gas of mass number 4 (deuterium) has an atom ratio of 0.00005, and however the gas of helium 3 generated in the reaction cell 40 had a maximum value of above 27%. In Figure 24, the gases of mass number 2, 3 and 4 had values of 0.7299, 0.27 and 0.00005, respectively.

The above helium 3 is an element obtained from nuclear fusion, and the fusion between the helium 3 (³He) and deuterium (²D) or between two helium 3 causes a big thermal energy.

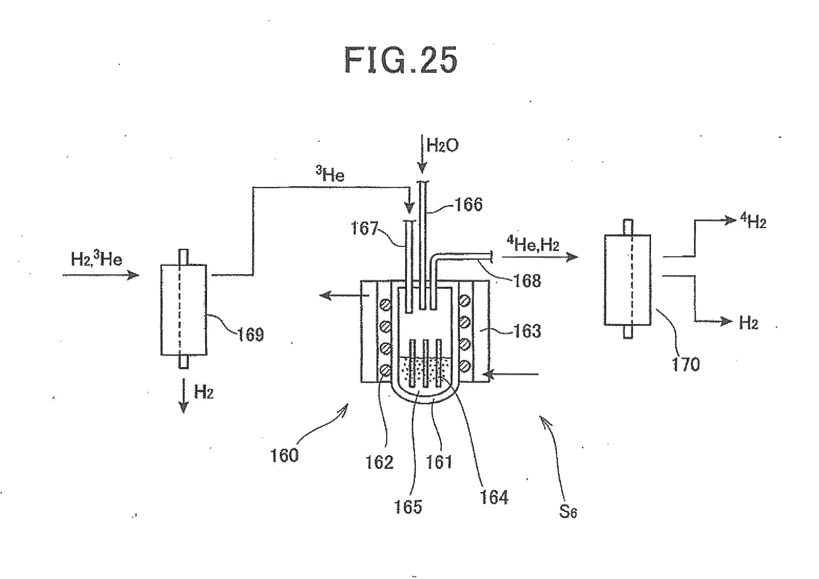

Figure 25 shows a low-temperature nuclear fusion system S₆ having a nuclear fusion cell 160 which comprises a main body 161 of SUS304, a high frequency inducing coil 162, water circulating jacket 163 through which water passes for taking thermal energy out of the cell 160. Fins 164 of SUS304 and reaction agent like NaOH are disposed in the main body 161 which is provided, on its upper wall, with a steam-supply pipe 166, a gas-supply pipe 167 for helium 3 (³He), deuterium (²D), etc. and a gas discharging pipe 168 for helium (⁴He), hydrogen, etc. generated after fusion. The gas supply pipe is connected with a centrifugal machine 169 which separates the helium 3 (³He) from the hydrogen which are collected by the hydrogen generating system shown in Figure 22, and the separated helium 3 (³He) is supplied to the nuclear fusion cell 160 while the separated hydrogen (H₂) is stored to be used in various ways. A centrifugal machine 170 is connected to the gas discharging pipe 168 also, and divides the discharging gas into e.g. hydrogen (H₂) and helium 4 (⁴He). Instead of those centrifugal machines 169 and 170, a separating fin made of palladium alloy can be used to separate helium from hydrogen. The ratio of largeness of hydrogen and helium molecular is approximately 4:1, and therefore their separation is relatively easy.

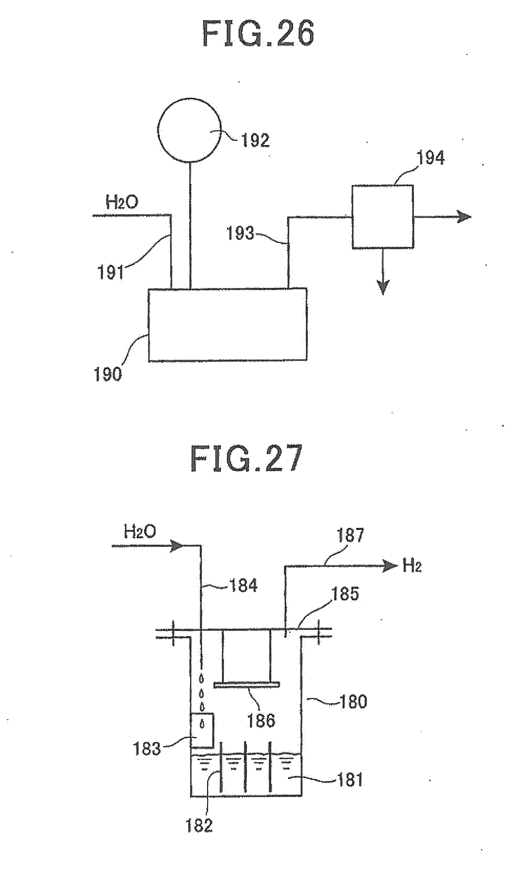

Above nuclear transformation reaction can be applied to resolution of poisonous materials. As shown in Figure 26, a resolving cell 190 having the same structure as the reaction cell 140 shown in Figure 22 is connected to a steam pipe 191, a tank 192 for poisonous material and a discharging pipe 193 having a gas separating device 194 in order to resolve the poisonous gas in the tank 192. The resolving cell 190 can resolve poisonous gases such as carbon dioxide, dioxin (C₁₂H₄O₂Cl₄), PCB, etc..

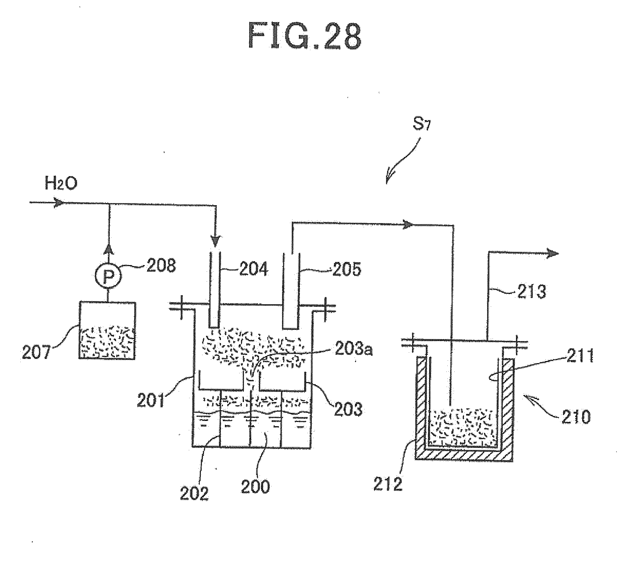

Further, the above nuclear transformation system can be used as a metal surface treatment. That is, a treating cell 180 has reaction agent 181 like NaOH therein in which fins 181 of SUS304 are dipped and a water pot 183 is disposed on the side wall of the cell 180, and the lower end of a water pipe 184 is opposed to the water pot 183 to generate steam in the water pot 183. The treating cell 180 is heated at a temperature around 500°C by a heater (not shown). The treating cell 180 has a detachable lid 185 from which a metal plate 186 to be treated hangs in the cell 180. The metal plate 186 is exposed to a plasma atmosphere to be heated and cooled many times for one second thereby to change the crystal structure of the metal, so that, for example, amorphous film may be formed. At this time, hydrogen can be generated as by-product, and is collected through a hydrogen pipe 187. And Figure 28 shows a rare-metal generating system S₇ which has a reaction cell 201 for accommodating reaction agent (NaOH) therein, and the cell 201 is heated at a temperature of 300 to 500°C by a heater (not shown). The cell 201 has some fins 202 therein, on the top of which a rare-metal collecting pan 203 is disposed, and an opening 203a is formed at the center of the pan 203 so that fine particles of the reaction agent can pass upwardly.

A steam pipe 204 is connected to the upper lid of the cell 201 and material tank 207 for storing fine particle on the order of nanometer to be transformed into other metals. The fine particles are fed by a suction pump 208 into the cell 201 together with a predetermined amount of steam, and transformed to be stored in the pan 203. Some light transformed metals and gas are supplied into an inner cylinder 211 in a cooler 210 through a collecting pipe 205. The cooler 210 is cooled by cooling agent 212, and the helium 3 and hydrogen are discharged through a discharging pipe 213. And it is possible that only gas is accommodated in the tank 207 instead of the metal to be transformed in the cell 201. In this manner, rare metal can be obtained.

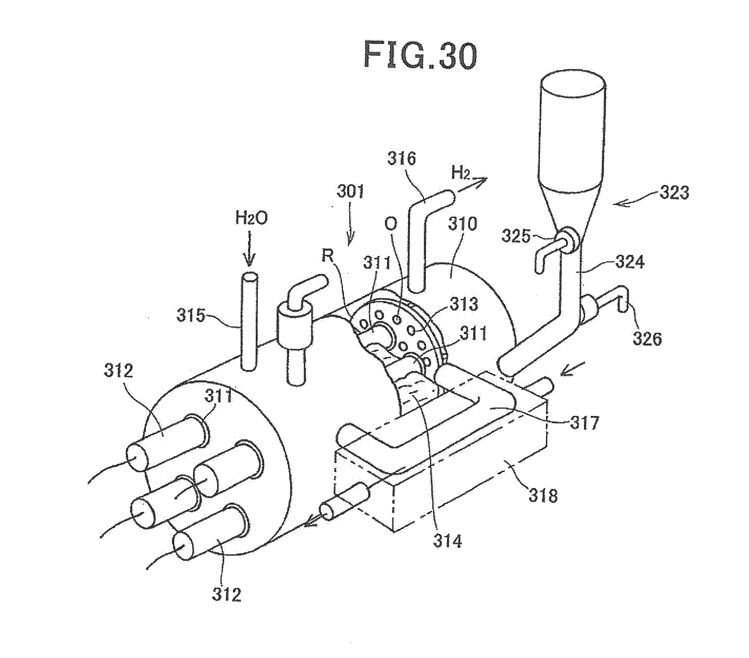

And a nuclear transformation system S₈ has a lateral-cylindrical reaction cell 301 into which superheated steam is supplied from a superheated steam generating device 302 which is heated by a high frequency inducing coil 303 into which steam produced in a steam producing tank 304 is fed, and water in the tank 304 is heated by a hydrogen burner 306. The reaction cell 301 has a cylindrical casing 310, as shown in Figure 30, which is provided with four heating pipes 311 therein in each of which a bar-like electric heater 312 is accommodated. The heating pipes 311 hold a plurality of circular fins 313 at a predetermined space each of which functions as a metal element supplying body and has a lot of openings O for passing hydrogen and steam therethrough.

A reaction agent 314 is put in the casing 310 and a reaction space R is formed above the reaction agent 314. A great many of minute particles are dispersed from the surface of the reaction agent, and a plasma atmosphere is formed, near the metal surfaces of the reaction space R, by the minute particles. The fins 313 and the casing 310 are heated by the heater 312. A steam pipe 315 is fastened at the end portion of the upper surface of the casing 310 for supplying the steam from the superheated steam generating device 302 thereinto and a hydrogen pipe 316 is fastened on the opposite side of the steam pipe 315. From the side wall of the casing 310 is projected a circulating pipe 317, for circulating the minute particles therethrough, which extends in a heat-exchanging box 318 in which water is circulated, and the circulated water takes thermal energy out of the casing 310. Namely, the circulating pipe 317, the heat-exchanging box 318 and the circulated water form a thermal energy take-out apparatus.

The hydrogen pipe 316 has a residuum box 370 for collecting residuum after a nuclear reaction through which hydrogen gas and helium gas (³He) pass to flow into a dividing device 318 having a dividing film 318a therein to be divided from each other. The helium 3 is stored in a gas cylinder 319 and mixed with deuterium gas (D₂) stored in a cylinder 320 to be supplied into the reaction cell 301 through a nuclear fusion pipe 321. The mixed gas performs a fusion reaction to generate thermal energy of 1000 to 2000°C. This thermal energy can be controlled by adjusting the amount of steam fed from the steam pipe 315.

The hydrogen (H₂) separated by the dividing device 318 is once stored in the hydrogen cylinder 322 to be supplied into a hydrogen burner 306. The reaction agent 314 in the reaction cell 301 is vaporized at a high temperature and a part of the reaction agent 314 is supplied into the residuum box 370 together with hydrogen gas and helium gas. That is, the reaction agent 314 is consumed, and, therefore, as shown in Figure 30, a supplementary cylinder 323 may be disposed so that the reaction agent 314 can be made up for the reaction cell 301. The supplementary cylinder 323 has a feeding pipe 324 which is provided, at its upper and lower portions, with two valves 325 and 326, respectively, so that the reaction agent can be supplied into the reaction cell without air by an opening and closing operation of the both valves.

When the reaction agent 314 is heated at a temperature of 400 to 500°C without oxygen in air, vaporous minute particles are dispersed from the surface of the reaction agent to produce a plasma atmosphere together with the metal element supplying body, namely, the inner surface of the reaction cell 301, the fins 313 and the outer surface of the heating pipe 311. The metal element supplying body may be in the shape of a plate, a lump or a grain. This plasma atmosphere can produce a nuclear transformation.

Further, other embodiments will now be explained.

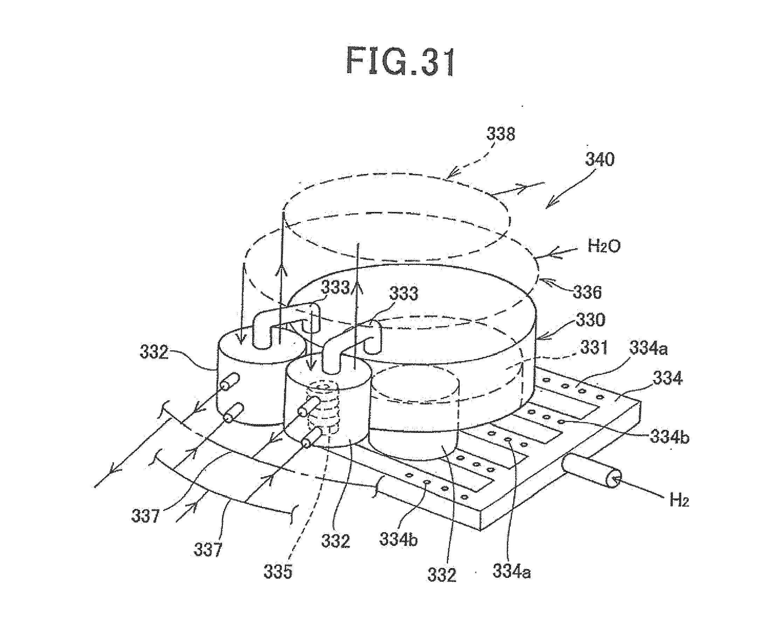

In Figure 31, a vertical-type reaction cell 340 has a reaction agent accommodating body 330 in the shape of a cylindrical casing which is low and have a large diameter so that a reaction agent is accommodated therein, and a lot of small cylindrical casings for forming reaction space rooms 332 are disposed around the casings into which fine particles of the reaction agent are supplied from the body 330 via respective connecting pipes 333. The body 330 and the reaction space rooms 332 are heated by a hydrogen burner 334 as a heated-air generating device which has a plurality of branch pipes 334a provided with a lot of openings 334b from which hydrogen flows outwards to be burned. A thermal energy take-out device 335 comprising a heat exchanging pipe is disposed in each reaction space room 332 so that water is circulated in the device 335 through a water circulating system 337. Water is supplied, at a predetermined timing, into the device 335 through a water supplying system 336, and, thus, hydrogen can be collected by a hydrogen collecting system 338.

Fins of SUS304 (not shown) are disposed in the reaction agent accommodating body 330 and the reaction space rooms 332, and steam may be supplied into the reaction space rooms 332 instead of water through the water supplying system 336.

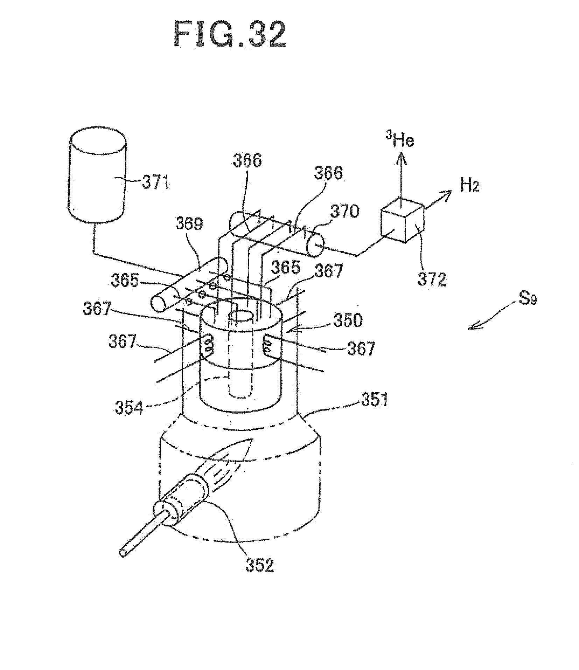

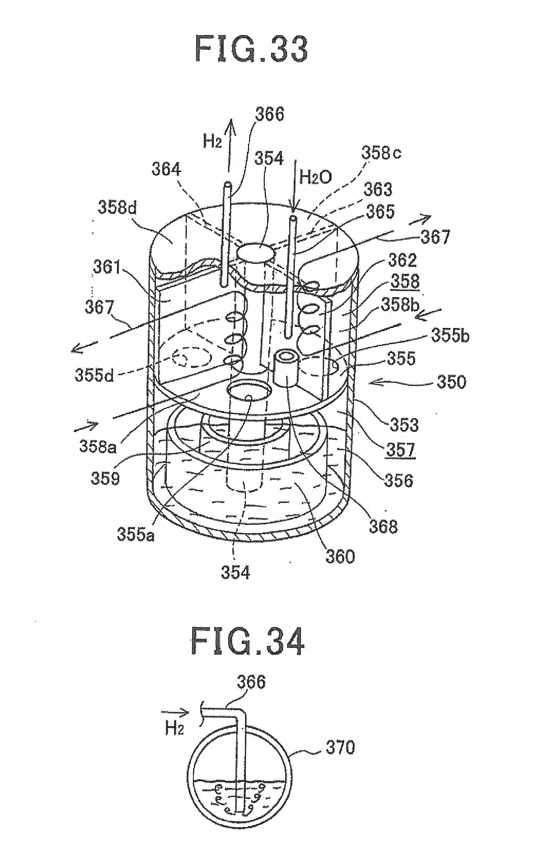

In figures 32 to 34, a nuclear transformation system S₉ has a vertical type of cylindrical reaction cell 350 which is disposed in a heating furnace 351 as s heating device which has a hydrogen burner 352 as a heated-air generating device which produces heated-air (hot air) for heating the reaction cell 350 at a temperature of 300 to 500°C. The reaction cell 350 has a cylindrical casing 353 which is provided with a heated-air path 354 at the center of the casing 353. The casing 353 is divided, by a dividing plate 355, into upper and lower portions to form a reaction space room 358 and a reaction agent accommodating space 357, respectively.

The reaction agent accommodating space 357 has two circular fins 359, 360 therein as a metal element supplying body, and the reaction space room 358 is divided into four reaction space rooms 358a, 358b, 358c, 358d by four dividing plates 361, 362, 363, 364 extending in its radius direction. The reaction space rooms are opposed to four connecting openings 355a, 355b, --- 355d, respectively, formed at the dividing plate 355 in such a manner that each room is filled with minute particles ejected from the reaction agent through those connecting openings. Each reaction space room is provided with a water supplying pipe 365, a hydrogen collecting pipe 366 and a heat-exchanging pipe 367 for circulating water, and a water pot 368 is disposed in each reaction space room so as to be opposed to each water supplying pipe 365 which is extended from a water supplying cylinder 369 into which water is supplied from a water tank 371. Each hydrogen collecting pipe 366 is connected with a horizontal hydrogen collecting cylinder 370 so that its distal end is positioned in water poured therein, and the cylinder 370 is connected with a dividing device 372 for separating helium 3 (³He) from hydrogen.

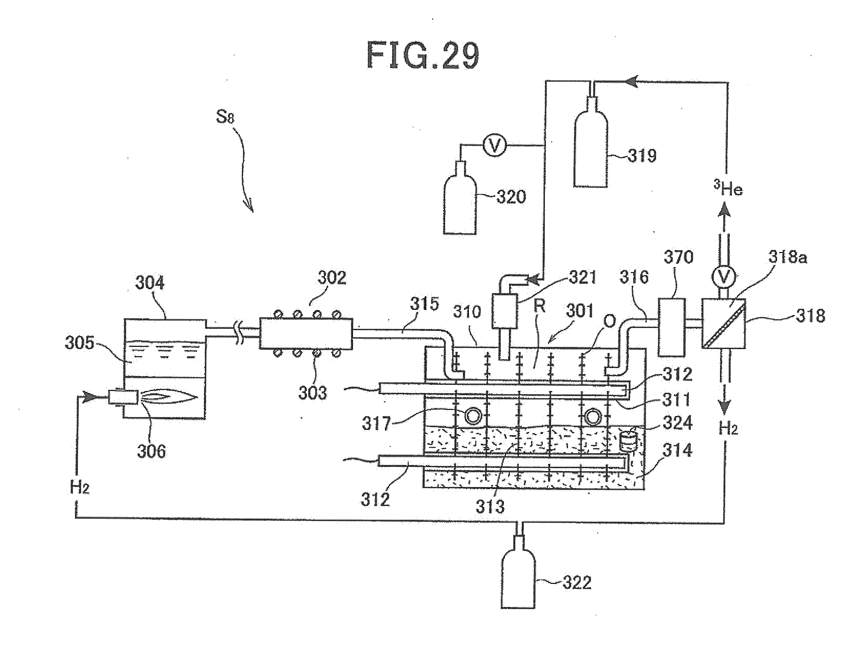

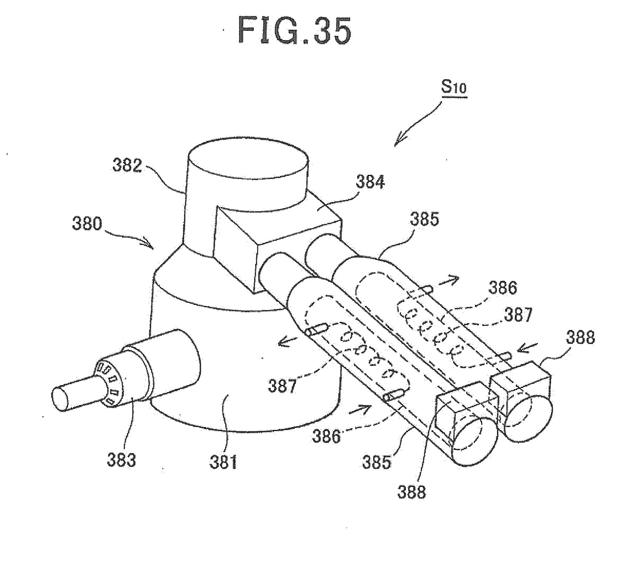

In Figure 35, a nuclear transformation system S₁₀ has a heating furnace 380 which is provided with a furnace cylinder 381 and a hot-air cylinder 382. The heating furnace 380 has a hydrogen burner 383, and the hot-air cylinder 382 has, at its side, a holding portion 384 for holding two heating cylinders 385 in each of which a horizontal reaction cell 386 is accommodated. Each cell 386 is provided with a thermal energy take-out device 387. The reaction cell 386 has the same structure as that as shown in Figure 29 except for the heating means. Hot air flows around the reaction cell 386 to heat a reaction agent and the casing thereof. Each heating cylinder 385 has, at the upper portion of the distal end of the heating cylinder 386, a hot-air discharging portion 388 for discharging hot-air.

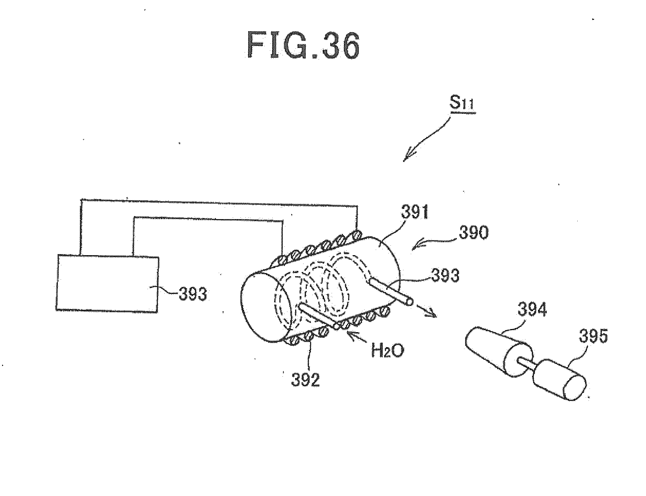

In Figure 36, a nuclear transformation system S₁₁ has a reaction cell 390 which is provided with a cylindrical casing 391 around which a high frequency inducing coil 392 is wound, and the coil 392 is controlled by a controller 393 so that an electric current with a frequency above 20 GHz flows in the coil 392 thereby to heat the reaction cell 390. A thermal energy take-out device 393 like a water circulating pipe is disposed in the casing 391. The coil 392 has a function to form a plasma phenomenon to remarkably increase a nuclear transformation efficiency. Steam of a high temperature from the thermal energy take-out device is fed to a turbine 394 for driving a turbine generator.

In this reaction, neutrons are ejected from the reaction cell when water is supplied, and therefore, the system S₁₁ can be adapted for a neutron ejecting device. Next, a neutron ejecting device will now be explained.

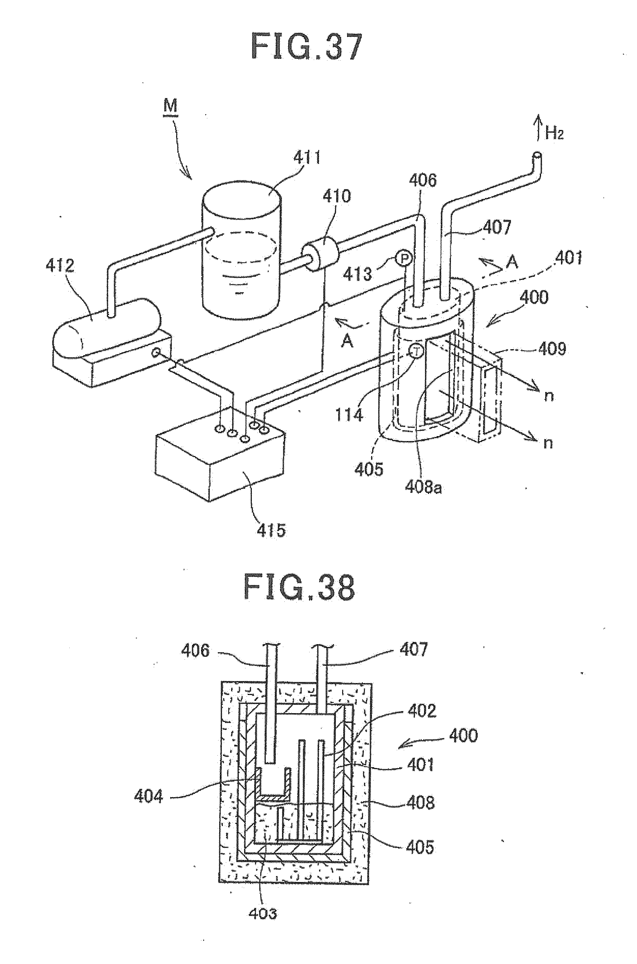

In Figure 37, a neutron generating machine M has a main body 400 which is provided with a vertical-type cylindrical reaction cell 401 made of SUS304 in which a fin 402 of SUS304, a reaction agent 403 and a water pot 404 are accommodated. The reaction cell 401 is heated, by a plate-like heater 405, at a temperature of 300 to 500°C, and the distal end of a water pipe is opposed to the water pot 404. Further, a hydrogen pipe 407 is extended upwardly from the upper surface of the reaction cell 401, and a shielding body 408 which comprises neutron absorbing material made of hydrogen compound or concrete is formed around the reaction cell 401. The reaction cell has, at its side surface, a rectangular guide body 409 extending in a lateral direction from the opening portions 408a of the heater 405 and the shielding body 408 so that neutron ray is directed to a detected article. Since the neutron ray can pass through the wall of the reaction cell 401, it is not necessary to form an opening on the wall of the reaction cell 401.

In Figure 37, the water pipe 406 is connected with, through an electromagnetic valve 410, a water tank 411 which is compressed, by a compressor 412, at an atmospheric pressure of 2 to 3, and water in the water tank 411 is supplied into the reaction cell 401 at a predetermined pressure in accordance with the opening and closing operation of the electromagnetic valve 410. The reaction cell 401 is equipped with a pressure gauge 413 and a thermometer, and the electromagnetic valve 410, the compressor 412, the pressure gauge 413, the thermometer 414 and the plate-like heater 405 are connected with a controller 415 so that the plate-like heater 405 is controlled in accordance with the temperature and pressure of the reaction cell 401 and so that the supply of water is controlled by the compressor 412 and the electromagnetic valve 410. When water is supplied into the reaction cell 401, it is confirmed that some neutrons are ejected therefrom, and therefore the amount of neutrons ejected at a detected article can be controlled in accordance with the amount and timing for water feeding.

Hydrogen gas (H₂) can be produced together with the generation of neutrons to be discharged into the atmosphere. The guide body 409 for directing neutrons to a desired direction is preferably made of zirconium (Zr) which hardly absorbs neutrons.

Next, two nuclear transformation systems S₁₂ and S₁₃ will now be explained.

As mentioned above, from the point of view that a nuclear transformation at a low temperature needs existences of minute particles on the order of nanometer, heavy electrons and elements having a tendency to nuclear transformation, the system S₁₂ as shown in Figure 39 can be provided in which a pair of opposed electrodes 501, 501 are disposed in a sealed casing 500 without oxygen therein, and each electrode 501 has a nano-particle layer 502, at its inner surface, which is formed in a manner that metal particles on the order of nanometer are stuck on a conductor plate 501 e.g., by means of vapor deposition. Electricity is supplied from a power source 503, to the opposed electrodes so as to be charged between them thereby to generate a nuclear reaction in a manner that the length between nuclei of elements in each nano-particle is narrowed by the function of nano-particles and heavy electrons. Especially, if nuclear-reaction gases such as deuterium (D₂), helium 3 (³He) and tritium (³T) are supplied, D-D reaction, D-H reaction or D-T reaction is apt to occur. The metal nano-particles are preferably fastened to the conductor 501 by nickel oxide (NiO).

In Figure 40, a sealed casing 510 from which oxygen is discharged is heated, by a heater 511, at a temperature above 500°C, and a nano-particle holding plate 512 is disposed in the sealed casing 510. The plate 512 is a good conductor of heat and has a metal nano-particle layer 513 thereon. Gas such as deuterium (D₂), herium 3 (³He) or tritium (³T) which is apt to cause a nuclear reaction is preferably supplied into the sealed casing 510. In the system S₁₃, since the sealed casing 511 is heated at a temperature above 500°C, steam can be used as a reaction gas. However, in the system S₁₂, since the sealed casing 500 is not heated, steam cannot be used as a reaction gas because the steam is changed into water at a low temperature.

## Claims

1. A method of nuclear transformation, wherein metal material is disposed in an atmosphere from which Oxygen is eliminated, the metal material is heated, and water is supplied into the atmosphere thereby to produce a nuclear transformation.

2. A method of nuclear transformation, wherein metal material is disposed in an atmosphere without oxygen, reaction agent including at least alkaline metal and oxygen is disposed, and the metal material and the reaction agent are so heated that fine particles are dispersed in the atmosphere from a surface of the reaction agent thereby to generate a nuclear reaction between the fine particles and the surface of the metal material.

3. A method of nuclear transformation according to claim 2, wherein water is supplied into the atmosphere without oxygen.

4. A method of nuclear transformation according to claim 1 or 2, wherein the atmosphere is heated at a temperature of above 490°C.

5. An apparatus for nuclear transformation comprising:
a hollow reaction cell made of metal material;
a heating device for heating the reaction cell; and
an air-eliminating device for eliminating air from an inside of the reaction cell,
wherein water is supplied into the reaction cell.

6. An apparatus for nuclear transformation according to claim 5, wherein a metal element supplying body is accommodated in the reaction cell.

7. An apparatus for nuclear transformation comprising:
a hollow reaction cell made of metal material;
a heating device for heating the reaction cell;
an air-elimination device for eliminating air from an inside of the reaction cell; and
a reaction agent which is accommodated in the reaction cell and includes at least alkaline metal and oxygen.

8. An apparatus for nuclear transformation according to claim 7, wherein water is supplied into the reaction cell.

9. An apparatus for nuclear transformation according to claim 5 or 7, wherein a heat exchanger is disposed in the reaction cell so that thermal energy can be taken out through the heat exchanger.

10. An apparatus for nuclear transformation comprising:
a sealed casing for producing an atmosphere without oxygen;
a pair of opposed electrodes which are disposed in the sealed casing and have metal particles on the order of nanometer; and
a power source for applying electric current onto the electrodes;
wherein a reaction gas such as steam, deuterium, tritium or helium 3 is supplied between the opposed electrodes.

11. An apparatus for nuclear transformation comprising:
a sealed casing for producing an atmosphere without oxygen;
a particle holding body as a heat conductor which is disposed in the sealed casing and holds metal particles on the order of nanometer, and
a heating device for heating the particle holding body and the sealed casing,
wherein a reaction gas such as steam, deuterium, tritium or helium 3 is supplied into the sealed casing.
